(19) Europäisches Patentamt / European Patent Office / Office européen des brevets

(11) **EP 4 293 743 A1**

(12) **EUROPEAN PATENT APPLICATION**

(43) Date of publication:
**20.12.2023 Bulletin 2023/51**

(21) Application number: **23172786.8**

(22) Date of filing: **11.05.2023**

(51) International Patent Classification (IPC):
*H01M 4/131* (2010.01)   *H01M 4/1391* (2010.01)
*H01M 4/36* (2006.01)   *H01M 4/505* (2010.01)
*H01M 4/525* (2010.01)   *H01M 10/0525* (2010.01)

(52) Cooperative Patent Classification (CPC):
**H01M 4/131; H01B 7/12; H01M 4/1391;**
**H01M 4/364; H01M 4/366; H01M 4/505;**
**H01M 4/525; H01M 10/0525**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **16.06.2022 JP 2022097278**

(71) Applicant: **Prime Planet Energy & Solutions, Inc.**
**Chuo-ku**
**Tokyo**
**103-0022 (JP)**

(72) Inventors:
• **HANAZAKI, Ryo**
  **Tokyo, 103-0022 (JP)**
• **TAKAHASHI, Keiichi**
  **Tokyo, 103-0022 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POSITIVE ELECTRODE AND NONAQUEOUS ELECTROLYTE SECONDARY BATTERY INCLUDING THE SAME**

(57)   A positive electrode disclosed herein includes: a positive electrode active material layer containing a first lithium-transition metal composite oxide in a form of secondary particles and a second lithium-transition metal composite oxide in a form of single particles; and a positive electrode current collector. In the first lithium-transition metal composite oxide, a boron compound is placed on the surfaces of the secondary particles, and a porosity of the secondary particles is 2% to 8%. In the second lithium -transition metal composite oxide, an aluminum compound is placed on the surfaces of the single particles. The first and second lithium-transition metal composite oxides each contain nickel at 70 mol% or more relative to the total amount of transition metal elements, and the mass ratio of the first lithium-transition metal composite oxide : the second lithium-transition metal composite oxide is 80 : 20 to 50 : 50.

FIG.1

**Description**

BACKGROUND OF THE DISCLOSURE

The present disclosure relates to a positive electrode and a nonaqueous electrolyte secondary battery including the same.

In recent years, the applications of batteries have been expanding. In particular, nonaqueous electrolyte secondary batteries such as lithium-ion secondary batteries have been suitably used as portable power sources for personal computers, mobile terminals, and the like, and power sources for driving vehicles such as battery electric vehicles (BEVs), hybrid electric vehicles (HEVs), and plug-in hybrid electric vehicles (PHEVs).

As nonaqueous electrolyte secondary batteries are becoming more widely used, further improvement in performance is required. In the positive electrode of the nonaqueous electrolyte secondary battery, a lithium-transition metal composite oxide is generally used as a positive electrode active material. In recent years, in light of high energy density, a lithium-transition metal composite oxide with high nickel content (hereinafter also referred to as "high Ni-containing lithium-transition metal composite oxide") has been noted as a positive electrode active material. For example, Japanese Patent Application Publication No. 2017-112103 discloses a positive electrode for lithium-ion secondary batteries, containing a lithium-transition metal composite oxide containing nickel at a ratio of at least 70 atom% of the total number of atoms of all metal atoms other than lithium, a binder, and a liquid polychlorotrifluoroethylene (P-CTFE). Japanese Patent Application Publication No. 2019-21627 also discloses a positive electrode material for lithium-ion batteries, which has an adjusted area percentage of each of secondary particles with different amounts of aggregation of single-crystal primary particles.

SUMMARY

However, a high Ni-containing lithium transition metal composite oxide as disclosed in Japanese Patent Application Publication No. 2017-112103 has a problem that particle cracking occurs during repeated charging and discharging, resulting in a decrease in cycle life. In detail, the high Ni-containing lithium-transition metal composite oxide has a large expansion and contraction during charging and discharging. Then, as the expansion and contraction are repeated, cracking occurs on the surface of the positive electrode active material. The nonaqueous electrolyte reacts with portions exposed from such cracks, and gas is generated. This may lead to a reduction in cycle life.

On the other hand, the positive electrode active material disclosed in Japanese Patent Application Publication No. 2019-21627 generates hydrogen fluoride gas by decomposing the nonaqueous electrolyte under high temperature endurance. The problem is that the generated hydrogen fluoride gas degrades the positive electrode and increases resistance.

The technology disclosed herein is intended to provide a positive electrode containing a high Ni-containing lithium-transition metal composite oxide, having a high energy density and high cycle characteristics, and reduced increase in resistance under high temperature endurance.

The positive electrode disclosed herein includes a positive electrode current collector and a positive electrode active material layer placed on the positive electrode current collector. The positive electrode active material layer contains a first lithium-transition metal composite oxide in a form of secondary particles which are aggregates of 30 or more primary particles, and a second lithium-transition metal composite oxide in a form of single particles which are primary particles or aggregates of two to ten primary particles. In the first lithium-transition metal composite oxide, a boron compound is placed on surfaces of the secondary particles, and the first lithium-transition metal composite oxide has an average porosity of the secondary particles observed in their cross sections by scanning electron microscope is 2% to 8%. In the second lithium-transition metal composite oxide, an aluminum compound is placed on surfaces of the single particles. The first and second lithium-transition metal composite oxides each contain nickel at 70 mol% or more relative to a total amount (100 mol%) of transition metal elements, and a mass ratio of the first lithium-transition metal composite oxide: the second lithium-transition metal composite oxide is 80 : 20 to 50 : 50.

With such a configuration, a battery having a high energy density, high cycle characteristics, and reduced increase in resistance under high temperature endurance is provided. In detail, first, the boron compound placed on the surface of the first lithium transition metal composite oxide increases the binding force of the secondary particles due to the action of the boron compound, thereby reducing particle cracking. Furthermore, the void spaces at the predetermined percentage in the first lithium transition metal composite oxide mitigate stress applied during expansion and contraction and reduces particle cracking. Thus, the cycle characteristics of the positive electrode improve. On the other hand, the aluminum compound placed on the surface of the second lithium transition metal composite oxide traps a hydrogen fluoride gas generated under high temperature endurance. With such action, the increase in resistance of the positive electrode under high temperature endurance can be reduced. Further, the first and second transition metal composite oxides each contain nickel (Ni) at 70 mol% or more relative to the total amount of the transition metal elements, thereby achieving high energy density. The mass ratio between the first lithium transition metal composite oxide and the second lithium transition metal composite oxide is set to the predetermined ratio. This achieves both improvement in cycle characteristics and reduction in the increase of the resistance under high temperature endurance.

BRIEF DESCRIPTION OF THE DRAWINGS

Fig. 1 is a schematic sectional view of a positive electrode according to an embodiment.
Fig. 2 is a schematic sectional view of a first lithium-transition metal composite oxide.
Fig. 3 is a schematic longitudinal sectional view of a lithium-ion secondary battery as an example of a secondary battery obtained by a manufacturing method according to an embodiment.
Fig. 4 is a schematic exposed view of an electrode body of the lithium-ion secondary battery of Fig. 3.

DETAILED DESCRIPTION

Embodiments of the technology disclosed herein will be described below with reference to the accompanying drawings. The matters necessary for executing the technology disclosed herein, which are not mentioned herein, can be grasped as design matters of those skilled in the art based on the related art in the present field. The technology disclosed herein can be executed based on the contents disclosed herein and the technical knowledge in the present field. In the following drawings, the same members/portions which exhibit the same action are denoted by the same reference numeral. The dimensional relation (such as length, width, or thickness) in each drawing does not reflect the actual dimensional relation. The numerical range expressed herein by "A to B" includes A and B, and also encompasses the meaning of "preferably more than A" and "preferably less than B."

A "secondary battery" herein indicates an electricity storage device that can be repeatedly charged and discharged, and encompasses so-called secondary batteries and electricity storage elements such as electric double-layer capacitors. A "lithium-ion secondary battery" herein indicates a secondary battery which uses lithium ions as electric charge carriers and achieves charging and discharging by movement of electric charges associated with the lithium ions between positive and negative electrodes. A "high Ni-containing lithium-transition metal composite oxide" indicates a lithium-transition metal composite oxide with a nickel (Ni) content of 70 mol% or higher relative to the total amount (100 mol%) of the transition metal elements.

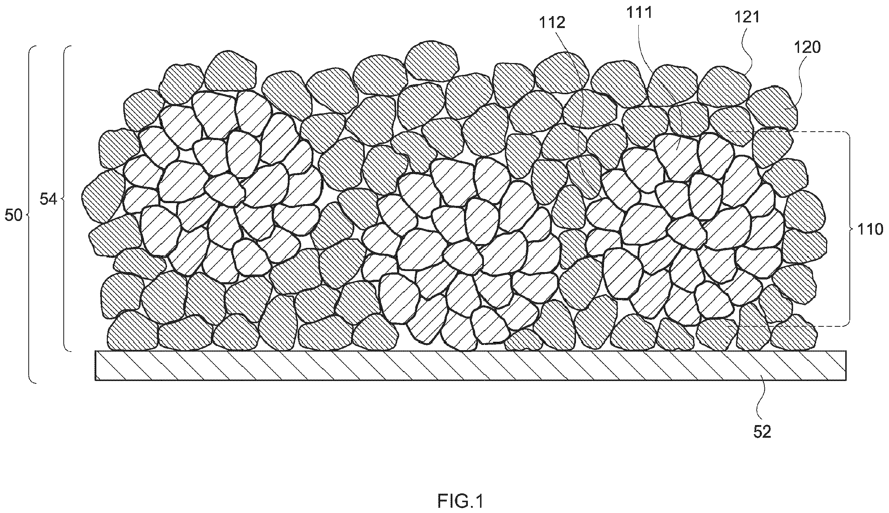

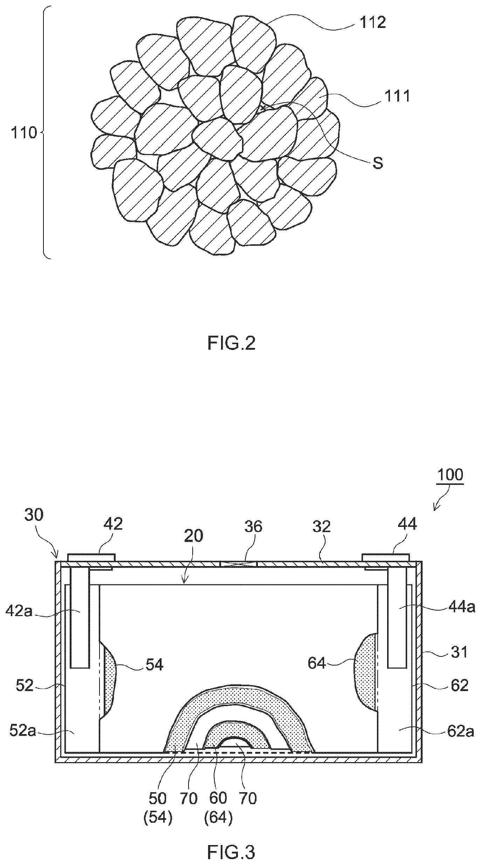

Fig. 1 is a schematic sectional view of a positive electrode according to an embodiment. Fig. 2 is a schematic sectional view of a first lithium-transition metal composite oxide according to the embodiment.

As shown in Fig. 1, a positive electrode 50 according to the present embodiment includes a positive electrode active material layer 54 provided on a positive electrode current collector 52. The positive electrode active material layer 54 contains a first lithium-transition metal composite oxide 110 and a second lithium-transition metal composite oxide 120.

As shown in Fig. 2, in the first lithium-transition metal composite oxide 110, a boron compound 112 is placed on the surface of the first lithium-transition metal composite oxide 110. As shown in Fig. 1, in the second lithium-transition metal composite oxide 120, an aluminum compound 121 is placed on the surface of the second lithium-transition metal composite oxide 120.

The first lithium-transition metal composite oxide 110 and the second lithium-transition metal composite oxide 120 are each preferably a high Ni-containing lithium-transition metal composite oxide. The nickel content in each of the first lithium-transition metal composite oxide 110 and the second lithium-transition metal composite oxide 120 is preferably 70 mol% or higher, more preferably 80 mol% or higher, yet more preferably 90 mol% or higher relative to the total amount (100 mol%) of the transition metals. In such a case, a high energy density can be achieved in the positive electrode 50.

The composition of the first lithium-transition metal composite oxide 110 may be identical to or different from that of the second lithium-transition metal composite oxide 120. Examples of the composition include a lithium-nickel-based composite oxide, a lithium-nickel-manganese-based composite oxide, a lithium-nickel-cobalt-manganese-based composite oxide, a lithium-nickel-cobalt-aluminum-based composite oxide, and a lithium-iron-nickel-manganese-based composite oxide. The particles of the first lithium-transition metal composite oxide and the second lithium-transition metal composite oxide are preferably particles of the lithium-nickel-cobalt-manganese-based composite oxide because of having excellent characteristics such as a low initial resistance.

The "lithium-nickel-cobalt-manganese-based composite oxide" herein includes an oxide containing Li, Ni, Co, Mn, and O as constitutional elements, and further includes an oxide which may contain one or more elements other than the constitutional elements. Examples of the one or more elements include transition metal elements and typical metal elements such as Mg, Ca, Al, Ti, V, Cr, Y, Zr, Nb, Mo, Hf, Ta, W, Na, Fe, Zn, and Sn. The lithium-nickel-cobalt-manganese-based composite oxide may contain metalloid elements such as B, C, Si, and P and nonmetallic elements such as S, F, Cl, Br, and I. The same applies to the lithium-nickel-based composite oxide, lithium-nickel-manganese-based composite oxide, lithium-nickel-cobalt-aluminum-based composite oxide, lithium-iron-nickel-manganese-based composite oxide, and the like.

The lithium-nickel-cobalt-manganese-based composite oxide particularly preferably has composition represented by the following formula (I):

$$Li_{1+x}Ni_yCo_zMn_{(1-y-z)}M_\alpha O_{2-\beta}Q_\beta \qquad (I).$$

In the formula (I), x, y, z, a, and $\beta$ satisfy $-0.3 \le x \le 0.3$, $0.7 \le y < 1.0$, $0 \le z \le 0.3$, $0 \le \alpha \le 0.1$, and $0 \le \beta \le 0.5$. M is at least one element selected from the group consisting of Al, Zr, B, Mg, Fe, Cu, Zn, Sn, Na, K, Ba, Sr, Ca, W, Mo, Nb, Ti, and Si. Q is at least one element selected from the group consisting of F, Cl, and Br.

The crystal structure of the lithium-transition metal composite oxide forming each of the first lithium-transition metal composite oxide 110 and the second lithium-transition metal composite oxide 120 is not particularly limited and may be a layered structure, a spinel structure, or the like. For example, each of the first lithium-transition metal composite oxide 110 and the second lithium-transition metal composite oxide 120 may have a layered rock salt type crystal structure as a suitable example.

As shown in Fig. 2, the first lithium-transition metal composite oxide 110 is in the form of secondary particles which are aggregates of multiple primary particles 111 of the first lithium-transition metal composite oxide. The number of primary particles 111 of the first lithium-transition metal composite oxide 110 forming the secondary particles of the first lithium-transition metal composite oxide 110 is not particularly limited, and is, for example, approximately 30 or more, preferably 50 or more, more preferably 80 or more, or typically 120 or less, for example, 100 or less. The "primary particle" herein refers to the smallest unit of particles forming the positive electrode active material, and specifically, the smallest unit determined based on the geometric form of the appearance checked by observation with an electron microscopy. An aggregate obtained by aggregating equal to or more than 30 primary particles herein is referred to as a "secondary particle."

As shown in Fig. 2, the first lithium-transition metal composite oxide 110 may have void spaces S derived from clearances between aggregated primary particles 111 of the first lithium-transition metal composite oxide 110 inside a secondary particle (i.e., the first lithium-transition metal composite oxide 110). The void spaces S in the secondary particle reduce stress generated when the nonaqueous electrolyte secondary battery is repeatedly charged and discharged. Further, the void spaces S allow the boron compound 112 to spread to the inner surface of the secondary particle. This increases the overall bonding force between the primary particles 111 to the inside of the secondary particle. Thus, the particle cracking of the first lithium-transition metal composite oxide 110 can be reduced more suitably. The void spaces S may or may not be open. If the void spaces S are open, each of the void spaces S may have two or more openings.

The porosity of the first lithium-transition metal composite oxide can be adjusted by changing synthesis conditions when a hydroxide, which is a precursor of the first lithium-transition metal composite oxide, is synthesized by a crystallization method. Specifically, in the crystallization method, a hydroxide is synthesized by adding an aqueous raw material solution containing metal elements other than lithium and a pH adjustment liquid to a reaction liquid. At this time, the pH value of the reaction liquid and the stirring rate are changed to adjust the porosity of the hydroxide. The resultant hydroxide is mixed with a compound (e.g., a lithium hydroxide), which is to be a lithium source, and the mixture is then fired, thereby obtaining particles of the first lithium-transition metal composite oxide having an adjusted porosity.

The "porosity of the first lithium-transition metal composite oxide" herein can be determined from a cross-sectional electron microscope image of the first lithium-transition metal composite oxide, and an average value can be calculated by measuring the porosities of multiple secondary particles selected arbitrarily. The multiple secondary particles may be, for example 20 particles or more. A sample for cross-sectional observation of the first lithium-transition metal composite oxide is produced by cross section polisher processing. Then, a SEM image of the sample for cross-sectional observation is obtained by using a scanning electron microscope (SEM). From the obtained SEM image, the area of the entire secondary particles and the total area of all void spaces inside the secondary particles are determined by using image analysis software (e.g., "ImageJ"). Then, porosities are determined by using the following equation (II):

$$\text{Porosity (\%)} = (\text{total area of all void space/area of all secondary particles}) \times 100 \ ...(II),$$

and the average value is calculated. From the viewpoint of achieving both stress mitigation and energy density during expansion and contraction, the average porosity of the first lithium transition metal composite oxide particles should be roughly between 2% and 8% inclusive.

A distribution of void spaces in each secondary particle of the first lithium-transition metal composite oxide (110) may or may not be uniform. If such distribution of the void spaces is not uniform, for example, under observation using a scanning electron microscope (SEM), the void spaces are preferably concentrated in an area inside of 1/2 of the radius of the secondary particle in terms of the center of the secondary particle. The "average of the percentages of void spaces observed in the areas inside of 1/2 the radius of the secondary particles" indicates the average of the percentages of void spaces obtained by observing multiple secondary particles (e.g., 20 or more) arbitrarily selected, and can be determined by the following method. First, a SEM image is obtained in the same manner as for calculation of the average porosity of the first lithium-transition metal composite oxide. From the obtained SEM image, the area S1 of void spaces in the area inside of 1/2 of the radius of the secondary particle and the area S2 of void spaces in the area outside of 1/2 of the radius of the secondary particle are determined by using image analysis software. Then, the percentage of the void spaces is determined by using the following equation (III):

$$\text{Percentage of void spaces observed in area inside of 1/2 of radius of secondary}$$

$$\text{particle} = S1/(S1 + S2) \times 100 \ldots (III),$$

and the average value is calculated. In this case, the average of percentages of void spaces observed in areas inside of 1/2 of the radius of secondary particles is, for example, 50% or higher, preferably 60% or higher, more preferably 70% or higher, relative to the total void spaces (100 area%) in the entire area of the secondary particle. Such a configuration allows mitigation of stress generated during repeated charging and discharging of the nonaqueous electrolyte secondary battery.

The mean particle diameter (D50) of the first lithium-transition metal composite oxide (secondary particles) is not particularly limited. Particularly in light of the high filling properties of the positive electrode active material layer and high volumetric energy density of the nonaqueous electrolyte secondary battery, the mean particle diameter (D50) of the first lithium-transition metal composite oxide (secondary particles) is preferably 5 pm to 30 pm, more preferably 10 $\mu$m to 20 pm.

The "mean particle diameter (D50)" herein is a median diameter (D50) corresponding to the particle diameter at a cumulative value of 50% of fine particle side in the volume-based particle size distribution based on laser diffraction/scattering method. The mean particle diameter (D50) can be determined using a laser diffraction and scattering particle size analyzer.

The mean primary particle diameter of the first lithium-transition metal composite oxide is not particularly limited. For example, in light of energy density and output characteristics of the positive electrode active material, the mean primary particle diameter of the first lithium-transition metal composite oxide is 0.05 $\mu$m to 2.5 pm, preferably 1.2 pm or larger, more preferably 1.5 pm or larger, yet more preferably 1.7 $\mu$m or larger. In light of higher cycle characteristics of the positive electrode active material, the mean primary particle diameter of the first lithium-transition metal composite oxide is preferably 2.2 $\mu$m or smaller, more preferably 2.1 pm or smaller.

The "mean primary particle diameter of the first lithium-transition metal composite oxide" herein can be determined from a cross-sectional electron microscope image of the first lithium-transition metal composite oxide, and indicates an average value of long diameters of multiple primary particles selected arbitrarily. The multiple primary particles may be, for example 20 particles or more. Thus, for the mean primary particle diameter, a sample for cross-sectional observation of particles of the first lithium-transition metal composite oxide is produced by cross section polisher processing, for example. Then, a SEM image of the sample for cross sectional observation of the particles of the first lithium-transition metal composite oxide is obtained by using a scanning electron microscope (SEM). The long diameters of the primary particles selected arbitrarily are determined from the SEM image by using image analysis particle size distribution measurement software (e.g., "Mac-View"), and an average value is calculated.

The boron compound 112 is placed on at least part of the surface of the first lithium-transition metal composite oxide 110. With such a configuration, the bonding force between primary particles is increased in the first lithium-transition metal composite oxide 110. This allows mitigation of stress during expansion and contraction and reduction in particle cracking. The boron compound is not particularly limited, but is, for example, preferably a boron-containing oxide or an oxide containing boron or lithium, more preferably a lithium borate salt or a boron oxide, specifically $LiBO_2$, $LiB(OH)_4$, LisBOs, $B_2O_3$, or the like.

The second lithium-transition metal composite oxide 120 is in a form of single particles. The "single particle" herein indicates a single primary particle or an aggregate of two to ten (preferably five or less) primary particles.

The single particle has properties of being difficult to aggregate. The single particle alone constitutes a particle of the lithium-transition metal composite oxide, or an aggregate of multiple primary particles of the single particle may constitute the particle of the lithium-transition metal composite oxide. However, when the aggregate of multiple primary particles of the single particle constitutes the particle of the lithium-transition metal composite oxide, the number of primary particles is, for example, between 2 to 10 inclusive. The second lithium-transition metal composite oxide 120 may be composed of roughly one to ten primary particles, one to five primary particles, one to three primary particles, or one primary particle. The number of primary particles in the single particle of the second lithium-transition metal composite oxide 120 can be checked by observation using a scanning electron microscope (SEM). As can be seen from above, the single particle differs from a secondary particle, which is an aggregate of 30 or more primary particles. The single particle preferably is not in the form of the secondary particle. The single-particle positive electrode active material can be produced by a known method of obtaining a single crystal particle.

The mean particle diameter (D50) of the second lithium-transition metal composite oxide 120 is not particularly limited, and is preferably 1 $\mu$m or larger, more preferably 2 $\mu$m or larger, yet more preferably 3 pm or larger, in light of energy density and output characteristics of the positive electrode active material. In light of higher cycle characteristics of the positive electrode active material, the mean primary particle diameter of the second lithium-transition metal composite oxide is preferably 6 $\mu$m or smaller, more preferably 5 pm or smaller.

The aluminum compound 121 is placed on at least part of the surface of the second lithium-transition metal composite oxide 120. With such a configuration, a hydrogen fluoride gas generated by decomposition of nonaqueous electrolyte can be trapped on the surface of the second lithium-transition metal composite oxide 120. As a result, the increase in resistance under high-temperature endurance by reducing the filling with the hydrogen fluoride gas. The aluminum compound 121 is not particularly limited, but may be, for example, preferably an aluminum-containing oxide, more preferably aluminum oxide, specifically, $Al_2O_3$ or the like.

The density of the positive electrode active material layer 54 is not particularly limited, but is, for example, 3.00 g/cm$^3$ to 4.00 g/cm$^3$, more preferably 3.20 g/cm$^3$ to 4.00 g/cm$^3$, yet more preferably 3.40 g/cm$^3$ to 4.00 g/cm$^3$, particularly preferably 3.50 g/cm$^3$ to 4.00 g/cm$^3$ in light of the high volumetric energy density of the positive electrode active material.

The mass ratio (the first lithium-transition metal composite oxide : the second lithium-transition metal composite oxide) between the first lithium-transition metal composite oxide and the second lithium-transition metal composite oxide in the positive electrode active material layer 54 is preferably 80 : 20 to 50 : 50, more preferably 70 : 30 to 50 : 50 in light of achieving both improvement in cycle characteristics and reduction in increase in resistance under high-temperature endurance.

The positive electrode active material layer 54 may further contain an electroconductive material, a binder, and the like. The electroconductive material used may be, for example, carbon black such as acetylene black (AB) and other carbon materials (such as graphite). The binder used may be, for example, polyvinylidene fluoride (PVDF). The positive electrode active material layer 54 can be formed by dispersing a positive electrode active material and optional materials (an electroconductive material, a binder, and the like) used if necessary, in an appropriate solvent (e.g., N-methyl-2-pyrrolidone (NMP), forming the resultant into a paste (or slurry) composition, applying an appropriate amount of the composition to the surface of a positive electrode collector 52, and then drying the composition.

The content of the positive electrode active material in the positive electrode active material layer 54 (i.e., the content of the positive electrode active material relative to the total mass of the positive electrode active material layer 54) is not particularly limited, but is preferably 70 mass% or more, more preferably between 80 mass% to 99 mass% inclusive, yet more preferably between 85 mass% to 98 mass% inclusive. The content of the electroconductive material in the positive electrode active material layer 54 is preferably between 0.5 mass% to 15 mass% inclusive, more preferably between 1 mass% to 10 mass% inclusive, without particular limitations. The content of the binder in the positive electrode active material layer 54 is between 0.5 mass% to 15 mass% inclusive, more preferably between 0.8 mass% to 10 mass% inclusive, without particular limitations.

The thickness of the positive electrode active material layer 54 is, for example, between 10 pm to 200 pm inclusive, preferably between 50 $\mu$m to 150 pm inclusive, more preferably between 50 pm to 100 pm inclusive, without particular limitations.

The positive electrode current collector 52 is made of preferably metal, for example, more preferably aluminum, nickel, titanium, or stainless steel, particularly preferably an aluminum foil. The positive electrode current collector 52 preferably has a strip-like shape such as a sheet or foil.

The positive electrode 50 disclosed herein is produced by the following procedures, for example. For example, the method of manufacturing the positive electrode roughly includes a matrix forming step, a compound placing step, and a mixing step. The components and the contents thereof of the positive electrode are as described above.

In the matrix forming step, the raw materials are used to form a matrix, i.e., the first and second lithium-transition metal composite oxides. A hydroxide, which is a precursor of the first lithium-transition metal composite oxide, may be obtained by a known crystallization method. As indicated above, when the hydroxide is obtained by the crystallization method, the pH value and the stirring speed are changed to adjust the porosity of the hydroxide. A hydroxide, which is a precursor of the second lithium-transition metal composite oxide, may also be obtained by a known crystallization method. Each of the resultant hydroxides is mixed with a lithium source by a known method, and each of the resultant mixtures is fired to obtain each of the first lithium-transition metal composite oxide and the second lithium-transition metal composite oxide.

A compound placing step is a step of mixing the resultant first lithium-transition metal composite oxide with a boron source and mixing the resultant second lithium-transition metal composite oxide with an aluminum compound. The method of the mixing is not particularly limited, and can be a known dry mixing method or a wet mixing method. For example, unreacted lithium and boron on the surface of the first lithium-transition metal composite oxide react with each other to produce a boron compound such as $LiBO_2$. The boron compound is placed on the surface of the first lithium-transition metal composite oxide. The boron source used in the compound placing step can be, for example, suitably, boric acid ($H_3BO_4$) and boron oxide ($B_2O_3$). Although not particularly limited thereto, a lithium source such as lithium hydroxide may further be added. Further addition of the lithium source exhibits the effect of facilitating the reaction of the boron source. On the other hand, the second lithium-transition metal composite oxide is mixed with the aluminum compound, so that the aluminum compound is placed on the surface of the second lithium-transition metal composite oxide.

In the mixing step, the first lithium-transition metal composite oxide and the second lithium-transition metal composite oxide which have undergone the particle placing step are weighed to have a predetermined mass ratio and then mixed. The method of the mixing can be a known method.

The resultant mixture is mixed with additives such as an electroconductive material and a solvent by the known method, thereby preparing a slurry. The resultant slurry is applied to the surface of the positive electrode current collector, dried, and compressed, thereby obtaining a positive electrode 50 disclosed herein.

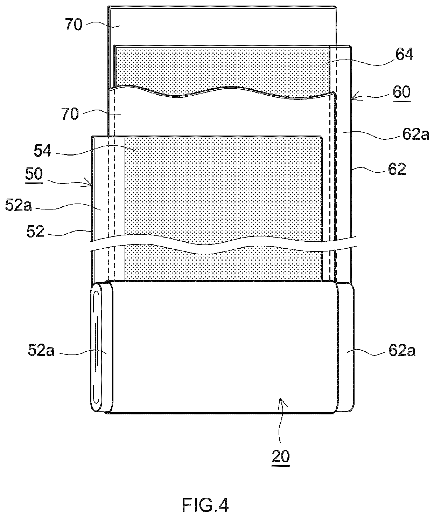

In another aspect, the nonaqueous electrolyte secondary battery according to the present embodiment includes a negative electrode, a positive electrode, and a nonaqueous electrolyte. The following describes a flat square lithium-ion secondary battery as an example of a nonaqueous electrolyte secondary battery obtained by the technology disclosed herein. Fig. 3 is a schematic longitudinal sectional view of a lithium-ion secondary battery as an example of a secondary battery obtained by a manufacturing method according to an embodiment. Fig. 4 is a schematic exposed view of an electrode body of the lithium-ion secondary battery. The lithium-ion secondary battery according to the present embodiment is not limited to the example described below.

Fig. 3 is a schematic longitudinal sectional view of an internal structure of a lithium-ion secondary battery 100 obtained by the manufacturing method according to an embodiment. The lithium-ion secondary battery 100 is a square sealed battery constructed by housing a flat electrode body 20 and a nonaqueous electrolyte (not shown) inside a battery case body 31 of a battery case 30 and then sealing an opening of the battery case body 31 with a lid 32. The lithium-ion secondary battery 100 is a lithium-ion secondary battery. The battery case 30 (a lid 32 in this case) is provided with a positive electrode terminal 42 and a negative electrode terminal 44 for external connections. The lid 32 is provided with a thin-walled safety valve 36 set so that the internal pressure of the battery case 30 is released when it reaches a predetermined level or higher. The lid 32 of the battery case 30 is further provided with an inlet (not shown) for introducing the nonaqueous electrolyte. The materials of the battery case body 31 and the lid 32 of the battery case 30 are each preferably a metal material which has high strength, is light, and has good thermal conductivity. Examples of such a metal material include aluminum and steel (steel material).

Fig. 4 is a schematic exposed view of the battery body 20 of the lithium-ion secondary battery 100 obtained by the manufacturing method according to an embodiment. As shown in Fig. 4, the electrode body 20 is obtained by stacking a positive electrode 50 having a long sheet shape and a negative electrode 60 having a long sheet shape via two separators 70 having a long sheet shape and winding the resultant laminate in the longitudinal direction. The positive electrode 50 includes a positive electrode current collector 52 and positive electrode active material layers 54 provided on both longitudinal surfaces of the positive electrode current collector 52. In one edge of the positive electrode current collector 52 in the winding axis direction (i.e., a sheet width direction orthogonal to the longitudinal direction), a portion (i.e., a positive electrode current collector exposing portion 52a) where the positive electrode active material layers 54 are not formed along the edge and the positive electrode current collector 52 is exposing is provided. The negative electrode 60 includes a negative electrode current collector 62 and negative electrode active material layers 64 formed on one of or both (here both) longitudinal surfaces of the negative electrode current collector 62. In the other edge on one side of the negative electrode current collector 62 in the winding axis direction, a portion (i.e., a negative electrode current collector exposed portion 62a) where a strip-like negative electrode active material layer 64 is not formed along the edge and the negative electrode current collector 62 is exposing is provided. A positive electrode current collector 42a is bonded to the positive electrode collector exposing portion 52a, and a negative electrode current collector 44a is bonded to the negative electrode current collector exposing portion 62a (see Fig. 3). The positive electrode current collector 42a is in electrical connection with the positive electrode terminal 42 for external connection, which provides conductivity between the inside and outside of the battery case 30. Similarly, the negative electrode current collector 44a is in electrical connection with the negative electrode terminal 44 for external connection, which provides conductivity between the inside and outside of the battery case 30 (see Fig. 3). A current chopping mechanism (CID) may be installed between the positive electrode terminal 42 and the positive electrode current collector 42a or between the negative electrode terminal 44 and the negative electrode current collector 44a.

Examples of the negative electrode current collector 62 constituting the negative electrode 60 include a copper foil. The negative electrode active material layer 64 contains a negative electrode active material. Examples of the negative electrode active material used include carbon materials such as graphite, hard carbon, and soft carbon. The negative electrode active material layer 64 may further contain a binder, a thickener, and the like. Examples of the binder used include styrene-butadiene rubber (SBR). Examples of the thickener used include carboxymethyl cellulose (CMC). The negative electrode active material layer 64 can be formed by dispersing a negative electrode active material and optional materials (a binder and the like) used if necessary, in an appropriate solvent (e.g., ion-exchange water), forming the resultant into a paste (or slurry) composition, applying an appropriate amount of the composition to the surface of a negative electrode current collector 62, and then drying the composition.

The separator 70 used may be any of various microporous sheets which are similar to those which have been used in a lithium-ion secondary battery, and examples thereof include microporous resin sheets made of resin such as polyethylene (PE) and polypropylene (PP). Such a microporous resin sheet may have a monolayer structure, or a layered structure of two or more layers (e.g., a three-layer structure where PP layers are stacked on both surfaces of a PE layer). The separator 70 may include a heat-resistance layer (HRL).

The nonaqueous electrolyte used may be any of those which are similar to those used in a lithium-ion secondary battery, and examples thereof include nonaqueous electrolytes obtained by causing an organic solvent (nonaqueous solvent) to contain a supporting electrolyte. The nonaqueous solvent used may be any of aprotic solvents such as carbonates, esters, and ethers. Among them, carbonates such as ethylene carbonate (EC), dimethyl carbonate (DEC), dimethyl carbonate (DMC), and ethyl methyl carbonate (EMC) may be suitably employed. These nonaqueous solvents may be used alone or in combination of two or more of them, as appropriate. Examples of the supporting electrolyte used include lithium salts such as $LiPF_6$, $LiBF_4$, and $LiClO_4$. The nonaqueous electrolyte may further contain, for example, various additives such as a gas generator, a film-forming agent, a dispersant, and a thickener, besides the nonaqueous electrolyte and the supporting electrolyte, as long as the effect of the present disclosure is not significantly impaired.

The lithium ion secondary battery 100 configured as described above includes a high Ni-containing lithium-transition metal composite oxide, and has high energy density and high cycle characteristics, and reduces resistance increase under high temperature endurance. The lithium-ion secondary battery 100 can be used for various applications. Suitable applications include power sources for driving, to be mounted on vehicles such as electric vehicles (BEV), hybrid vehicles (HEV), and plug-in hybrid vehicles (PHEV). Further, the lithium-ion secondary battery 100 can be used as a storage battery such as a small power storage device. Typically, the multiple lithium-ion secondary batteries 100 used may be connected in series and/or parallel to be in an assembled battery.

The square lithium-ion secondary battery 100 including the flat wound electrode body 20 has been described above as an example. However, the lithium-ion secondary battery can be configured as a lithium-ion secondary battery including a laminated electrode body (i.e., an electrode body where multiple positive electrodes and multiple negative electrodes are stacked alternately). The lithium-ion secondary battery may also be configured as a cylindrical lithium-ion secondary battery or a laminated lithium-ion secondary battery.

Examples regarding the technology disclosed herein will be described below. However, it is not intended that the present disclosure is limited to such examples.

(Example 1)

<Production of Positive Electrode Active Material Layer>

[Production of First Lithium-Transition Metal Composite Oxide]

Nickel sulfate, cobalt sulfate, and manganese sulfate were mixed to have Ni : Co : Mn = 8 : 1 : 1 in molar ratio, and the resultant mixture was dissolved in ion-exchange water. Thus, an aqueous raw material solution was prepared. Further, an aqueous sodium hydroxide solution and ammonia water were prepared using ion-exchange water. The ion-exchange water was stirred at a stirring speed of 1000 rpm while keeping the temperature in the range of 30°C to 60°C, and the pH of the ion-exchange water was adjusted in the range of 11 to 12 with the aqueous sodium hydroxide solution. Then, the aqueous raw material solution, the aqueous sodium hydroxide solution, and the ammonia water were added to the ion-exchange water while controlling the pH, thereby obtaining $Ni_{0.8}Co_{0.1}Mn_{0.1}(OH)_2$ as a coprecipitation product (hydroxide particles). The resultant hydroxide particles were filtered, washed with water, and dried in an oven set at 120°C, thereby obtaining a nickel-cobalt-manganese composite hydroxide. The ion-exchange water used herein was aerated with inactive gas in advance to remove dissolved oxygen.

The resultant nickel cobalt manganese composite hydroxide was heated at 450°C for 5 hours in an atmospheric atmosphere and then cooled. A lithium hydroxide and the nickel cobalt manganese composite hydroxide were mixed to have Li : (Ni + Co + Mn) = 1 : 1, thereby obtaining a mixture. The resultant mixture was fired at 770°C for 10 hours under an oxygen atmosphere. Accordingly, a matrix of a first lithium-transition metal composite oxide with 2% porosity was obtained. The porosity was measured by the method described above.

$H_3BO_4$ was dry-mixed with the resultant matrix of the first lithium-transition metal composite oxide. At this time, the molar ratio between the total amount of metal element in the matrix of the first lithium-transition metal composite oxide and boron was 100 : 1.0. Then, boron was composited on the surfaces of particles of the matrix of the first lithium-transition metal composite oxide, and heat-treated at 200°C for 3 hours under an oxygen atmosphere. Thus, a first lithium-transition metal composite oxide A1 where $LiBO_2$ was present on the surfaces of the particles of the matrix of the first lithium-transition metal composite oxide was obtained.

[Production of Second Lithium-Transition Metal Composite Oxide]

A nickel-cobalt-manganese composite hydroxide with composition $Ni_{0.8}Co_{0.1}Mn_{0.1}(OH)_2$ was obtained in the same manner as for the first lithium-transition metal composite oxide. Then, the resultant nickel-cobalt-manganese composite hydroxide was fired at 450°C for 5 hours in an atmospheric atmosphere, thereby obtaining a nickel-cobalt-manganese composite oxide. Next, a lithium hydroxide and the resultant nickel-cobalt-manganese composite oxide were mixed to have a molar ratio between Li and the total amount of Ni, Co, and Mn of Li : (Ni + Co + Mn) = 1.05 : 1. The resultant mixture was fired at 850°C for 72 hours in an oxygen atmosphere. The resultant fired product was wet-ground with a ball mill, dried, and fired at 750°C for 10 hours in an oxygen atmosphere, thereby obtaining a matrix of the second lithium-transition metal composite oxide having a single particle structure. The mean particle diameter (D50) of the matrix of the resultant second lithium-transition metal composite oxide obtained by the method was 3.3 pm. Further, the matrix of the second lithium-transition metal composite oxide was observed by SEM, and the result showed that the matrix of the second lithium-transition metal composite oxide was particles having a single particle structure, and the particle diameter thereof was 2.3 $\mu$m to 3.5 pm.

An $Al_2O_3$ powder was dry-mixed with the matrix of the resultant second lithium-transition metal composite oxide. At this time, the molar ratio between the total amount of metal elements in the matrix of the second lithium-transition metal composite oxide and aluminum was 100 : 1.0. Thus, a second lithium-transition metal composite oxide A2 where $Al_2O_3$ was present on the surfaces of particles of the matrix of the second lithium-transition metal composite oxide A2 was obtained.

[Mixing of First and Second Lithium-Transition Metal Composite Oxides]

The first lithium-transition metal composite oxide A1 and the second lithium-transition metal composite oxide A2 were weighed to have a solid mass ratio of A1 : A2 = 50 : 50. The weighed first and second lithium-transition metal composite oxides were placed in a rocking mixer and mixed for 5 minutes, thereby obtaining a positive electrode active material mixture B1.

<Production of Positive Electrode>

The positive electrode active material mixture B1, acetylene black (AB) as an electroconductive material, and polyvinylidene fluoride (PVDF) as a binder were mixed at a solid content mass ratio of the positive electrode active material mixture B1 : AB : PVDF = 96.3 : 2.5 : 1.2. An appropriate amount of N-methyl-2-pyrrolidone (NMP) was added to the resultant mixture, which was then kneaded, thereby preparing a slurry for forming the positive electrode active material layer. The resultant slurry for forming the positive electrode active material layer was applied to both surfaces of the positive electrode current collector made of an aluminum foil and dried, thereby forming a positive electrode active material layer. The resultant positive electrode active material layer was roll-pressed with a rolling roller to have a mixture density of 3.70 g/cm$^3$, and then cut into predetermined dimensions, thereby producing a positive electrode sheet.

<Production of Negative Electrode Sheet>

Graphite (C) as a negative electrode active material, a styrene-butadiene rubber (SBR) as a binder, and carboxymethyl cellulose (CMC) as a thickener were mixed in ion-exchange water at a solid content mass ratio of C : CBR : CMC = 100 : 1 : 1. Thus, a slurry for forming a negative electrode active material layer was prepared. The resultant slurry for forming the negative electrode active material layer was applied to a negative electrode current collector made of a copper foil and dried, thereby forming a negative electrode active material layer. The resultant negative electrode active material layer was roll-pressed with a rolling roller to have a predetermined density, and then cut into predetermined dimensions, thereby producing a negative electrode sheet.

<Provision of Separator>

As a separator, a porous polyolefin sheet having a three-layer structure of PP/PE/PE was provided.

<Adjustment of Nonaqueous Electrolyte>

In a solvent mixture containing electrolyte carbonate (EC), ethyl methyl carbonate (EMC), and dimethyl carbonate (DMC) at a volume ratio of EC : EMC : DMC = 30 : 40 : 30, as a nonaqueous electrolyte, 1 mol/L $LiPF_6$ as a supporting electrolyte was dissolved. Vinylene carbonate (VC) was further added at 2 mass% to the resultant solution.

<Production of Lithium-Ion Secondary Battery for Evaluation>

The sheet-like positive electrode and the sheet-like negative electrode produced were stacked facing each other via a separator, thereby producing a laminated electrode body. The laminated electrode body was provided with a current collector terminal, which was then housed in an aluminum-laminated bag. Then, the laminated electrode body was impregnated with the nonaqueous electrolyte, and an opening of the aluminum, laminated bag was sealed, thereby producing a lithium-ion secondary battery for evaluation.

(Examples 2 and 3)

Lithium-ion secondary batteries for evaluation of Examples 2 and 3 were produced in the same manner as in Example 1 except that the porosity of the lithium-transition metal composite oxide A1 was as shown in Table 1.

(Example 4)

A lithium-ion secondary battery for evaluation of Example 4 was produced in the same manner as in Example 1 except that void spaces were not formed in the first lithium-transition metal composite oxide A1.

(Example 5)

A lithium-ion secondary battery for evaluation of Example 5 was produced in the same manner as in Example 1 except that $LiBO_2$ instead of $Al_2O_3$ was present on surfaces of particles of the second lithium -transition metal composite oxide A2.

(Example 6)

A lithium-ion secondary battery for evaluation of Example 6 was produced in the same manner as in Example 1 except that $Al_2O_3$ instead of $LiBO_2$ was present on surfaces of particles of the first lithium-transition metal composite oxide A1.

(Example 7)

A lithium-ion secondary battery for evaluation of Example 7 was produced in the same manner as in Example 1 except that no compound was present on surfaces of particles of each of the first and second lithium-transition metal composite oxides (A1 and A2).

(Examples 8 to 10)

Lithium-ion secondary batteries for evaluation of Examples 8 to 10 were produced in the same manner as in Example 1 except that the solid content mass ratios of the first lithium-transition metal composite oxide A1 and the second lithium-transition metal composite oxide A2 were as shown in Table 1.

(Example 11)

A lithium-ion secondary battery for evaluation of Example 11 was produced in the same manner as in Example 1 except that $Al_2O_3$ and $LiBO_2$ were both present on surfaces of particles of the first lithium-transition metal composite oxide A1.

(Example 12)

A lithium-ion secondary battery for evaluation of Example 12 was produced in the same manner as in Example 1 except that void spaces in the first lithium-transition metal composite oxide A1, which is more than 50% of void spaces in the secondary particle, were formed in an area inside each secondary particle from the center portion of the secondary particle to more than 1/2 of the radius of the secondary particle, and the positive electrode active material layer was roll-pressed with a rolling roller to have a mixture density of 3.65 $g/cm^3$ when the positive electrode sheet was formed.

(Example 13)

A $B_2O_3$ was dry-mixed with the matrix of the resultant first lithium-transition metal composite oxide. At this time, the molar ratio between the total amount of metal elements in the matrix of the first lithium-transition metal composite oxide and boron was 100 : 1.0. Then, boron was composited on surfaces of particles of the matrix of the first lithium-transition metal composite oxide, and heat-treated at 100°C for 3 hours under an oxygen atmosphere. Thus, a first lithium-transition metal composite oxide A1 where $B_2O_3$ was present on the surfaces of the particles of the matrix of the first lithium-transition metal composite oxide was obtained. A lithium-ion secondary battery for evaluation of Example 13 was produced in the same manner as in Example 1 except for it.

(Example 14)

$H_3BO_4$ was dry-mixed with the resultant matrix of the first lithium-transition metal composite oxide. At this time, the molar ratio between the total amount of metal element in the matrix of the first lithium-transition metal composite oxide and boron was 100 : 1.0. Then, boron was composited on the surfaces of particles of the matrix of the first lithium-transition metal composite oxide, and heat-treated at 100°C for 3 hours under an oxygen atmosphere. Thus, a first lithium-transition metal composite oxide A1 where $LiB(OH)_4$ was present on the surfaces of the particles of the matrix of the first lithium-transition metal composite oxide was obtained. A lithium-ion secondary battery for evaluation of Example 14 was produced in the same manner as in Example 1 except for it.

(Example 15)

$H_3BO_4$ was dry-mixed with the resultant matrix of the first lithium-transition metal composite oxide. At this time, the molar ratio between the total amount of metal element in the matrix of the first lithium-transition metal composite oxide and boron was 100 : 1.0. Then, boron was composited on surfaces of particles of the matrix of the first lithium-transition metal composite oxide, and heat-treated at 400°C for 3 hours under an oxygen atmosphere. Thus, a first lithium-transition metal composite oxide A1 where LisBOs was present on the surfaces of the particles of the matrix of the first lithium-transition metal composite oxide was obtained. A lithium-ion secondary battery for evaluation of Example 15 was produced in the same manner as in Example 1 except for it.

<Cycle Test>

Lithium-ion secondary batteries for evaluation of Examples 1 to 15 were subjected to a cycle test in a thermostatic chamber set at 25°C, and the capacity retention rates thereof were evaluated. Specifically, initial discharge capacities were measured by first subjecting the lithium-ion secondary batteries for evaluation to a constant-current constant-voltage (CCCV) charging to 4.2 V at a current value of 0.3 C and thereafter a constant-current (CC) discharging to 2.5 V at a current value of 0.3 C. The initial capacities were checked, and a charging and discharging cycle of subjecting the lithium-ion secondary batteries to the constant-current constant-voltage (CCCV) charging to 4.2 V at a current value of 0.5 C and thereafter the constant-current (CC) discharging to 3.0 V at a current value of 0.5 C, as one cycle, was repeated a total of 500 cycles. Thereafter, charging and discharging were performed under the same conditions as for measurement of the initial capacities, and the discharge capacities after the cycle test were measured. Then, the cycle capacity retention rates of Examples 1 to 15 were calculated by using the following equation (1):

$$\text{Cycle capacity retention rate (\%)} = (\text{Discharge capacity after cycle test/Initial discharge capacity}) \times 100 \ldots (1).$$

Table 1 shows the results.

<Storage Test>

Resistance increase rates of the lithium-ion secondary batteries for evaluation of Examples 1 to 15 during storage at 60°C (i.e., under high temperature endurance) were evaluated. Specifically, first, the lithium-ion secondary batteries for evaluation were subjected to constant-current constant-voltage (CCCV) charging at a current value of 0.3 C in a thermostatic chamber set at 25°C, and the state of charge was adjusted to 50%. Thereafter, the discharge rates under the discharge conditions was changed to 0.5 C, 1.0 C, and 1.5 C, and the pulse discharging was conducted for 10 seconds. Then, the initial resistance values of Examples 1 to 15 were calculated by using the following equation (2):

$$\text{Resistance value} = \text{Voltage change } (\Delta V)/\text{Discharge current (I)} \dots (2).$$

Next, the lithium-ion secondary batteries for evaluation were subjected to constant-current constant-voltage (CCCV) charging to 4.2 V at a current value of 0.3 C in the environment at 25°C, and then stored for 180 days in the environment at 60°C. Then, the resistance values of Examples 1 to 15 after the storage were calculated in the same manner as described above using the equation (2). Thereafter, the resistance increase rates of Examples 1 to 15 were determined by using the following equation (3):

$$\text{Resistance increase rate } (\%) = (\text{Resistance value after storage test/Initial}$$

$$\text{resistance value}) \times 100 \dots (3).$$

Table 1 shows the results.

[Table 1]

Table 1

| | Void Spaces in First Lithium-Transition Metal Composite Oxide | | Compound on Surfaces of Particles | | Mass Ratio | Battery Characteristics | |
|---|---|---|---|---|---|---|---|
| | Porosity (%) | Void Distribution | First Lithium-Transitim Metal Composite Oxide | Second Lithium-Transition Metal Compcsie Oxide | First Lithium-Transition Metal Composite Oxide : Second Lithium-Transition Metal Composie Oxide | Cycle Capacity Retention Rate (%) | Resistance Increase Rate during 60°C Storage (%) |
| Ex. 1 | 2 | Uniform (Porous) | $LiBO_2$ | $Al_2O_3$ | 50:50 | 98.3 | 309.4 |
| Ex. 2 | 8 | Uniform (Porous) | $LiBO_2$ | $Al_2O_3$ | 50:50 | 98.4 | 311.1 |
| Ex. 3 | 10 | Uniform (Porous) | $LiBO_2$ | $Al_2O_3$ | 50:50 | 96.5 | 340.5 |
| Ex. 4 | 0 | - | $LiBO_2$ | $Al_2O_3$ | 50:50 | 96.8 | 308.0 |
| Ex. 5 | 2 | Uniform (Porous) | $LiBO_2$ | $LiBO_2$ | 50:50 | 98.0 | 331.9 |
| Ex. 6 | 2 | Uniform (Porous) | $Al_2O_3$ | $Al_2O_3$ | 50:50 | 97.0 | 305.5 |

(continued)

| | | Void Spaces in First Lithium-Transition Metal Composite Oxide | | Compound on Surfaces of Particles | | Mass Ratio | Battery Characteristics | |
|---|---|---|---|---|---|---|---|---|
| | | Porosity (%) | Void Distribution | First Lithium-Transitim Metal Composite Oxide | Second Lithium-Transition Metal Compcsie Oxide | First Lithium-Transition Metal Composite Oxide : Second Lithium-Transition Metal Composie Oxide | Cycle Capacity Retention Rate (%) | Resistance Increase Rate during 60°C Storage (%) |
| Ex. 7 | | 2 | Uniform (Porous) | None | None | 50:50 | 71.8 | 595.1 |
| Ex. 8 | | 2 | Uniform (Porous) | $LiBO_2$ | $Al_2O_3$ | 80:20 | 98.0 | 311.3 |
| Ex. 9 | | 2 | Uniform (Porous) | $LiBO_2$ | $Al_2O_3$ | 90:10 | 95.4 | 387.5 |
| Ex. 10 | | 2 | Uniform (Porous) | $LiBO_2$ | $Al_2O_3$ | 40:60 | 95.9 | 358.7 |
| Ex. 11 | | 2 | Uniform (Porous) | $LiBO_2/Al_2O_3$ | $Al_2O_3$ | 50:50 | 982 | 282.2 |
| Ex. 12 | | 2 | Concertrated in the center | $LiBO_2$ | $Al_2O_3$ | 50:50 | 98.6 | 307.2 |
| Ex. 13 | | 2 | Uniform (Porous) | $B_2O_3$ | $Al_2O_3$ | 50:50 | 97.8 | 318.5 |
| Ex. 14 | | 2 | Uniform (Porous) | $LiB(OH)_4$ | $Al_2O_3$ | 50:50 | 97.3 | 320.0 |
| Ex. 15 | | 2 | Uniform (Porous) | $Li_3BO_3$ | $Al_2O_3$ | 50:50 | 976 | 317.7 |

As can be seen from the results shown in Table 1, in Example 7 in which no compound is placed on the surfaces of the first and second lithium-transition metal composite oxides, the cycle capacity retention rate (i.e., the cycle characteristics) was the lowest, and the resistance increase rate during storage at 60°C (i.e., under high temperature endurance) was the highest. In contrast, in Example 1 in which $LiBO_2$ was placed on the surface of the first lithium-transition metal composite oxide and $Al_2O_3$ was placed on the surface of the second lithium-transition metal composite oxide, the cycle capacity retention rate was high, and the resistance increase rate under high temperature endurance was kept low. This is considered to be due to exhibition of both the effect of improving cycle characteristics by $LiBO_2$ placed on the surface of the first lithium-transition metal composite oxide and the effect of keeping the resistance increase rate under high temperature endurance by $Al_2O_3$ low.

Next, when examined from the viewpoint of the porosity of the first lithium-transition metal composite oxide, in Example 2 in which the porosity was 8% had a high cycle capacity retention rate and a low resistance increase rate under high temperature endurance. As can be seen from the results of Example 12, even when the average of percentages of void spaces observed in areas inside of 1/2 of the radius of secondary particles of the first lithium-transition metal composite oxide was 50% or higher relative to the void spaces of all secondary particles, the performance achieving both the high cycle characteristics and the low resistance increase under high temperature endurance was obtained.

In Example 5 in which $LiBO_2$ was placed on the surfaces of both the first and second lithium-transition metal composite oxides, the resistance increase under high temperature endurance was higher than in Example 1. In Example 6 in which $Al_2O_3$ was placed on the surfaces of both the first and second lithium-transition metal composite oxides, the cycle capacity retention rate was lower than in Example 1. In Example 11 in which $LiBO_2$ and $Al_2O_3$ were both placed on the surface of the first lithium-transition metal composite oxide, high cycle characteristics and low resistance increase under high temperature endurance were both achieved.

As can be seen from the results of Examples 8 to 10 and 1, when the mass ratio of the first lithium-transition metal composite oxide: the second lithium-transition metal composite oxide was in the range of 80 : 20 to 50 : 50, the performance achieving both high cycle characteristics and low resistance increase under high temperature endurance was obtained.

As can be seen from the results of Examples 13 to 15, the boron compound placed on the surface of the first lithium-transition metal composite oxide is not limited to $LiBO_2$, and various boron compounds achieved high cycle characteristics and low resistance increase under high temperature endurance.

As can be seen from above, according to the positive electrode disclosed herein, the performance achieving both high cycle characteristics and low resistance increase under high temperature endurance can be achieved.

As described above, specific aspects of the technology disclosed herein include those described in the following items:

Item 1: A positive electrode including a positive electrode current collector and a positive electrode active material layer placed on the positive electrode current collector, wherein the positive electrode active material layer contains a first lithium-transition metal composite oxide in a form of secondary particles which are aggregates of 30 or more primary particles, a second lithium-transition metal composite oxide in a form of single particles which are primary particles or aggregates of two to ten primary particles, in the first lithium-transition metal composite oxide, a boron compound is placed on surfaces of the secondary particles, and the first lithium-transition metal composite oxide has an average porosity of the secondary particles observed in their cross sections of the secondary particles by a scanning electron microscope is 2% to 8%, in the second lithium-transition metal composite oxide, an aluminum compound is placed on surfaces of the single particles, the first and second lithium-transition metal composite oxides each contain nickel at 70 mol% or more relative to a total amount of transition metal elements, and a mass ratio of the first lithium-transition metal composite oxide : the second lithium-transition metal composite oxide is 80 : 20 to 50 : 50.

Item 2: The positive electrode according to item 1, wherein the boron compound includes at least one selected from the group consisting of a lithium borate salt and boron oxide.

Item 3: The positive electrode according to item 1 or 2, wherein the aluminum compound includes an aluminum oxide.

Item 4: The positive electrode according to any one of items 1 to 3, wherein at least lithium borate salt and aluminum oxide are present on the surface of the first lithium-transition metal composite oxide.

Item 5: The positive electrode according to any one of items 1 to 4, wherein a percentage of void spaces observed in an area inside of 1/2 of the radius of the secondary particles from the center of the secondary particles is 50% or higher of a total void spaces of the secondary particles.

Item 6: A nonaqueous electrolyte secondary battery including the positive electrode according to any one of items 1 to 5, a negative electrode, and a nonaqueous electrolyte.

Although specific examples of the technology disclosed herein have been described in detail above, they are mere examples and do not limit the appended claims. The technology described is the appended claims include various modifications and changes of the foregoing specific examples.

**Claims**

1. A positive electrode (50) comprising:

a positive electrode current collector (52); and
a positive electrode active material layer (54) placed on the positive electrode current collector (52), wherein the positive electrode active material layer (54) contains:

a first lithium-transition metal composite oxide (110) in a form of secondary particles which are aggregates of 30 or more primary particles (111),
a second lithium-transition metal composite oxide (120) in a form of single particles which are primary particles or aggregates of two to ten primary particles,

in the first lithium-transition metal composite oxide (110),

a boron compound (112) is placed on surfaces of the secondary particles (110), and
an average porosity of the secondary particles (110) observed in their cross sections of the secondary particles (110) by a scanning electron microscope is 2% to 8%,

in the second lithium-transition metal composite oxide (120),

an aluminum compound (121) is placed on surfaces of the single particles,

the first and second lithium-transition metal composite oxides (110, 120) each contain nickel (Ni) at 70 mol% or more relative to a total amount of transition metal elements, and

a mass ratio of the first lithium-transition metal composite oxide (110) : the second lithium-transition metal composite oxide (120) is 80 : 20 to 50 : 50.

2. The positive electrode (50) according to claim 1, wherein the boron compound (112) includes at least one selected from the group consisting of a lithium borate salt and boron oxide.

3. The positive electrode (50) according to claim 1 or 2, wherein the aluminum compound (121) includes an aluminum oxide.

4. The positive electrode (50) according to any one of claims 1 to 3, wherein at least lithium borate salt and aluminum oxide are present on the surface of the first lithium-transition metal composite oxide (110).

5. The positive electrode (50) according to any one of claims 1 to 4, wherein a percentage of void spaces observed in an area inside of 1/2 of the radius of the secondary particles (110) from the center of the secondary particles (110) is 50% or higher of a total void spaces of the secondary particles (110).

6. A nonaqueous electrolyte secondary battery (100) comprising:

the positive electrode (50) according to any one of claims 1 to 5;
a negative electrode (60); and
a nonaqueous electrolyte.

FIG.1

EP 4 293 743 A1

FIG.2

FIG.3

FIG.4

# EP 4 293 743 A1

## EUROPEAN SEARCH REPORT

Application Number

EP 23 17 2786

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | "Why Magnification is Irrelevant in Modern Scanning Electron Microscopes Application Note Introduction", , 5 July 2011 (2011-07-05), XP055222489, Retrieved from the Internet: URL:http://www.toyo.co.jp/files/user/img/product/microscopy/pdf/5990-8594EN.pdf [retrieved on 2015-10-21] * the whole document * | | INV. H01M4/131 H01M4/1391 H01M4/36 H01M4/505 H01M4/525 H01M10/0525 |
| T | JASTRZEBSKA ILONA ET AL: "Traditional vs. Automated Computer Image Analysis-A Comparative Assessment of Use for Analysis of Digital SEM Images of High-Temperature Ceramic Material", MATERIALS, vol. 16, no. 2, 13 January 2023 (2023-01-13), page 812, XP093094712, DOI: 10.3390/ma16020812 * page 8 – page 20 * | | |
| T | Anonymous: "Transition metal – Wikipedia", , 1 January 2000 (2000-01-01), XP093032392, Retrieved from the Internet: URL:https://en.wikipedia.org/wiki/Transition_metal [retrieved on 2023-03-16] * the whole document * | | TECHNICAL FIELDS SEARCHED (IPC) H01M |
| X | WO 2022/088151 A1 (CONTEMPORARY AMPEREX TECHNOLOGY LTD) 5 May 2022 (2022-05-05) * paragraph [0133] – paragraph [0137]; example 1 * | 1-6 | |

-/--

The present search report has been drawn up for all claims

| Place of search | Date of completion of the search | Examiner |
|---|---|---|
| Munich | 25 October 2023 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

page 1 of 2

| | Europäisches Patentamt<br>European Patent Office<br>Office européen des brevets | **EUROPEAN SEARCH REPORT** | **Application Number**<br>**EP 23 17 2786** |

## DOCUMENTS CONSIDERED TO BE RELEVANT

| Category | Citation of document with indication, where appropriate,<br>of relevant passages | Relevant<br>to claim | CLASSIFICATION OF THE<br>APPLICATION (IPC) |
|---|---|---|---|
| X | CN 111 640 918 A (SHENZHEN XINHENGYE CELL TECH CO LTD) 8 September 2020 (2020-09-08)<br>* paragraph [0056] – paragraph [0057] *<br>----- | 1-5 | |

**TECHNICAL FIELDS<br>SEARCHED (IPC)**

The present search report has been drawn up for all claims

| Place of search | Date of completion of the search | Examiner |
|---|---|---|
| Munich | 25 October 2023 | Radeck, Stephanie |

EPO FORM 1503 03.82 (P04C01)

## ANNEX TO THE EUROPEAN SEARCH REPORT
## ON EUROPEAN PATENT APPLICATION NO.

EP 23 17 2786

This annex lists the patent family members relating to the patent documents cited in the above-mentioned European search report.
The members are as contained in the European Patent Office EDP file on
The European Patent Office is in no way liable for these particulars which are merely given for the purpose of information.

25-10-2023

| Patent document cited in search report | | Publication date | Patent family member(s) | | Publication date |
|---|---|---|---|---|---|
| WO 2022088151 | A1 | 05-05-2022 | CN | 116802834 A | 22-09-2023 |
| | | | EP | 4075547 A1 | 19-10-2022 |
| | | | JP | 2023513558 A | 31-03-2023 |
| | | | KR | 20230031939 A | 07-03-2023 |
| | | | US | 2023119115 A1 | 20-04-2023 |
| | | | WO | 2022088151 A1 | 05-05-2022 |
| CN 111640918 | A | 08-09-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017112103 A

- JP 2019021627 A